# EUROPÄISCHE PATENTSCHRIFT

(11) **EP 3 829 849 B1**
(45) Veröffentlichungstag und Bekanntmachung des Hinweises auf die Patenterteilung: **03.04.2024**
(21) Anmeldenummer: 19749686.2
(22) Anmeldetag: 31.07.2019
(51) Int. Cl.: B29C 48/00, B29C 48/05, B29C 48/285, B29C 48/395, B29C 48/60, B29K 101/12, B29K 105/08, B29K 105/10

(54) **VERFAHREN UND VORRICHTUNG ZUR HERSTELLUNG EINES FASERVERSTÄRKTEN PLASTIFIKATS**
METHOD AND DEVICE FOR PRODUCING A FIBRE-REINFORCED POLYMER MELT
PROCÉDÉ ET DISPOSITIF DE FABRICATION D'UN COMPOSANT PLASTIQUE RENFORCÉ PAR DES FIBRES

(30) Priorität: 03.08.2018 DE 102018118883
(43) Veröffentlichungstag der Anmeldung: 09.06.2021
(73) Patentinhaber: KraussMaffei Technologies GmbH, 85599 Parsdorf (DE)
(72) Erfinder: SCHADHAUSER, Maximilian, 82008 Unterhaching (DE); SCHIERL, Stefan, 82110 Germering (DE)
(74) Vertreter: Wilhelm, Ludwig
(86) Internationale Anmeldenummer: PCT/EP2019/070607
(87) Internationale Veröffentlichungsnummer: WO 2020/025663

(56) Entgegenhaltungen:
- EP-A1- 1 815 962
- EP-A1- 2 781 342
- EP-A1- 3 299 151
- WO-A2-2008/071782
- WO-A2-2014/153535
- CN-U- 204 160 774
- DE-A1- 4 016 784
- DE-A1-102006 038 948
- US-A1- 2003 003 291
- US-A1- 2017 151 728
- US-B1- 6 364 518

## Beschreibung

Die Erfindung betrifft ein Verfahren und eine Vorrichtung zur Herstellung eines faserverstärkten Plastifikats. Die Erfindung betrifft ferner die Verwendung eines solches erfindungsgemäßen Plastifikats und eine erfindungsgemäßen Vorrichtung für die additive Fertigung von faserverstärkten Kunststoffbauteilen.

Aus dem Stand der Technik ist die Herstellung von Kunststoffbauteilen mittels additiver Fertigung, dem sogenannten 3D-Druck, in verschiedenen Ausführungsformen bekannt. Beim sogenannten Fused Deposition Modeling (FDM; deutsch: Schmelzschichtung) oder Fused Filament Fabrication (FFF) wird ein Kunststoffbauteil mittels eines 3D-Druckers schichtweise aus einer Kunststoffschmelze aufgebaut. Hierzu sei beispielhaft auf die WO2015/171832A1 verwiesen. Bei Verwendung von Kunststoffgranulat oder Kunststoffstäbchen, in welchen Fasern enthalten sind, können mittels 3D-Druck auch kurzfaserverstärkte Kunststoffbauteile hergestellt werden.

Aus der Zeitschrift "Carbon Composites Magazin", Ausgabe 1/2016, ISSN 2366-8024, Seiten 43 und 44, ist es bekannt, endlosfaserverstärkte Strukturen mit 35% Faservolumengehalt im 3D-Druck herzustellen, indem als Ausgangsmaterial ein Hybridgarn aus Glasfasern und Polypropylen als Verstärkungs- und Matrixkomponente verwendet wird.

Die Druckschrift US 2003/0003291 A1 lehrt die Einarbeitung von Endlos-Verstärkungsfasern in eine Thermoplastschmelze mit Hilfe eines Einschneckenextruders, welcher sie gezielt durch Scherung zerkleinert.

Eine weitere Variante zur Herstellung von endlosfaserverstärkten Kunststoffbauteilen ist die Verwendung von sogenannten UD-Tapes. Hierbei handelt es sich um ein vergleichsweise teures Halbzeug, das in einem aufwändigen Herstellungsverfahren erzeugt wird und erst danach zur Weiterverarbeitung bei der Herstellung von endlosfaserverstärkten Kunststoffbauteilen verwendet werden kann.

Ausgehend von dem vorgenannten Stand der Technik liegt der Erfindung die Aufgabe zugrunde, ein Verfahren und eine Vorrichtung zur Herstellung eines faserverstärkten Plastifikats anzugeben, welches mit einem oder mehreren endlosen Fasersträngen verstärkt ist und welches somit für die additive Fertigung von endlosfaserverstärkten Kunststoffbauteilen geeignet ist.

Die Lösung dieser Aufgabe erfolgt hinsichtlich des Verfahrens mit den Merkmalen von Anspruch 1 und hinsichtlich der Vorrichtung mit den Merkmalen des nebengeordneten Anspruchs 10. Vorteilhafte Weiterentwicklungen und Ausgestaltungen finden sich in den abhängigen Ansprüchen.

Ein Kerngedanke der vorliegenden Erfindung ist darin zu sehen, dass mittels eines Einschnecken-Extruders ein Kunststoffmaterial aufgeschmolzen wird, dass endlose Faserstränge in die Kunststoffschmelze eingegeben werden und diese im Wesentlichen unbeschädigt und mit Kunststoffschmelze getränkt aus eine Düse des Einschnecken-Extruders ausgetragen werden. Der Einschnecken-Extruder umfasst einen Zylinder und eine darin drehbar gelagerte Schnecke. Ein Kunststoffmaterial wird über eine erste Einfüllöffnung in dem Zylinder in den Einschnecken-Extruder zugeführt und darin zu einer Kunststoffschmelze aufgeschmolzen. Förderabseitig von der ersten Einfüllöffnung wird ein Massestrom dmF/dt von einem oder mehreren endlosen Fasersträngen über eine zweite Einfüllöffnung in dem Zylinder in den Einschnecken-Extruder eingeführt. Im Bereich der zweiten Einfüllöffnung liegt das Kunststoffmaterial als Kunststoffschmelze vor. Die endlosen Faserstränge werden in trockenem Zustand in die Kunststoffschmelze eingegeben und mit Kunststoffschmelze getränkt. Das Gemisch aus Fasersträngen und Kunststoffschmelze wird aus einer am förderabseitigen Ende des Zylinders befindlichen Düse als endlosfaserverstärktes Plastifikat ausgetragen. Damit die endlosen und mit Kunststoffschmelze getränkten Faserstränge möglichst unbeschädigt aus der Düse austreten, wird eine Schnecke verwendet, die förderabseitig von der zweiten Einfüllöffnung eine hierzu geeignete Schneckengeometrie aufweist. Vorzugsweise kann dieser Abschnitt der Schnecke als reine Förderschnecke ausgebildet sein. Es ergibt sich ein Massestrom dmS/dt von aus der Düse austretender Kunststoffschmelze und ein Massestrom dmP/dt von aus der Düse austretendem faserverstärktem Plastifikat. Der Massestrom dmF/dt und der Massestrom dmS/dt sollen in einem ersten Verhältnis zueinander stehen, bei welchem die aus der Düse austretenden endlosen Faserstränge im Wesentlichen vollständig mit Kunststoffschmelze getränkt sind. Dieses erste Verhältnis stellt ein erstes Massestrom-Soll-Verhältnis dar, welches über vorgebbare Zeitabschnitte im Wesentlichen konstant gehalten wird. Alternativ zu diesem ersten Verhältnis oder in Ergänzung dazu sollen der Massestrom dmF/dt und der Massestrom dmP/dt in einem zweiten Verhältnis zueinander stehen, bei welchem die aus der Düse austretenden endlosen Faserstränge im Wesentlichen vollständig mit Kunststoffschmelze getränkt sind, wobei das zweite Verhältnis ein zweites Massestrom-Soll-Verhältnis darstellt, welches über vorgebbare Zeitabschnitte im Wesentlichen konstant gehalten wird.

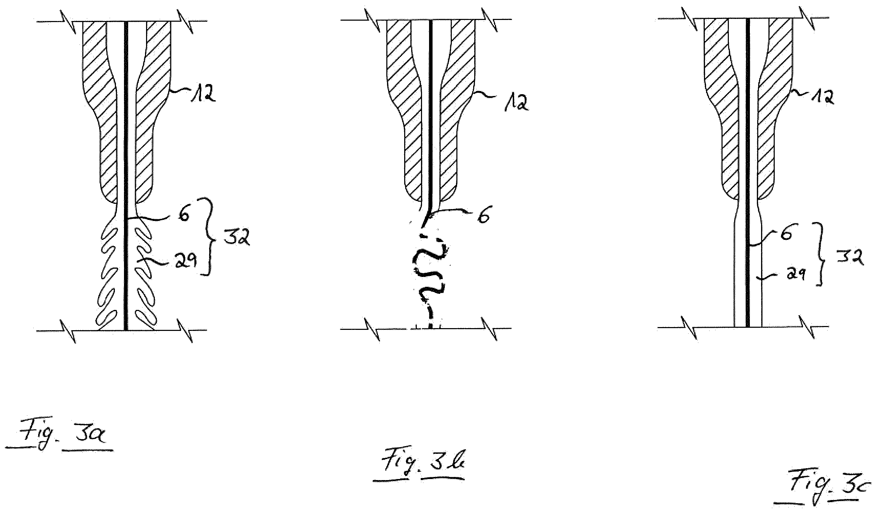

Mittels des erfindungsgemäßen Verfahrens wird verhindert, dass über vorgebbare Zeitabschnitte mehr Kunststoffschmelze als Fasermaterial oder mehr Fasermaterial als Kunststoffschmelze aus der Düse ausgetragen wird. Die Figur 3a zeigt einen Zustand, bei welchem mehr Kunststoffschmelze als Fasermaterial ausgetragen wird und die Figur 3b zeigt einen Zustand, bei welchem mehr Fasermaterial als Kunststoffschmelze ausgetragen wird. In der Figur 3c ist ein Zustand dargestellt, in welchem das erste und/oder zweite Massestrom-Soll-Verhältnis vorliegt. Der besseren Übersicht halber ist in den Figuren 3a, 3b und 3c der Faserstrang als mit Kunststoffschmelze ummantelt dargestellt. In der Realität wird der Faserstrang jedoch von Kunststoffschmelze durchdrungen. Man kann auch sagen, dass der Faserstrang mit Kunststoffschmelze getränkt ist.

Wenn lediglich ein einziger mit Kunststoffschmelze getränkter endloser Faserstrang aus der Düse ausgetragen werden soll, kann die Einstellung des ersten und/oder zweiten Massestrom-Soll-Verhältnisses derart eingestellt und vorzugsweise derart geregelt werden, dass der aus der Düse austretende Faserstrang eine mit Kunststoffschmelze überzogene und vorzugsweise glatte Oberfläche aufweist.

Wenn mehrere Faserstränge verwendet und mehrere mit Kunststoffschmelze getränkte Faserstränge aus der Düse ausgetragen werden sollen, kann die Einstellung des ersten und/ oder zweiten Massestrom-Soll-Verhältnisses derart eingestellt und vorzugsweise derart geregelt werden, dass die aus der Düse austretenden getränkten Faserstränge jeweils eine mit Kunststoffschmelze überzogene und vorzugsweise glatte Oberfläche aufweisen. Im Ergebnis kann somit ein ganzes Bündel an Fasersträngen ausgetragen werden, wobei jeder Faserstrang für sich genommen im Wesentlichen vollständig von Kunststoffschmelze getränkt ist. Bei dem Bündel an vollständig getränkten Fasersträngen kann in eventuell vorliegenden Zwischenräumen zusätzliche Kunststoffschmelze vorliegen. Ebenso kann bei dem Bündel an vollständig getränkten Fasersträngen das Bündel als solches eine mit Kunststoffschmelze überzogene und vorzugsweise glatte Oberfläche aufweisen.

In Weiterentwicklung der Erfindung kann vorgesehen werden, dass das erste Massestrom-Soll-Verhältnis und/oder das zweite Massestrom-Sollverhältnis in einer vorgeschalteten Lernphase ermittelt wird. Hierzu können geeignete Versuche gefahren werden, um ein geeignetes bzw. ein richtiges erstes Verhältnis von Massestrom dmF/dt zu Schmelzestrom dmS/dt und/oder von Massestrom dmF/dt zu Plastifikatstrom dmP/dt zu ermitteln.

Beispielsweise kann die Lernphase die nachfolgenden Schritte umfassen:
1. Einstellen einer initialen Faserzuführgeschwindigkeit, die der Umfangsgeschwindigkeit der Schnecke in der Fasereinzugszone entspricht;
2. Einstellen eines initialen Kunststoffmassestroms, der dem maximal von der eingesetzten Schnecke plastifizierbaren Kunststoffmassestrom entspricht;
3. Reduzierung der Faserzuführgeschwindigkeit um beispielsweise 5% der initialen Faserzuführgeschwindigkeit
4. Wiederholen des vorherigen Schrittes so oft, bis der ausgetragene Faser-Kunststoff-Strang eine glatte Oberfläche aufweist.

Alternativ kann die Lernphase auch die nachfolgenden Schritte umfassen:
1. Einstellen einer initialen Faserzuführgeschwindigkeit, die 60% der Umfangsgeschwindigkeit der Schnecke in der Fasereinzugszone entspricht;
2. Einstellen eines initialen Kunststoffmassestroms, der dem maximal von der eingesetzten Schnecke plastifizierbaren Kunststoffmassestrom entspricht;
3. Reduzierung des Kunststoffmassestroms um beispielsweise 5% des initialen Kunststoffmassestroms,
4. Wiederholen des vorherigen Schrittes so oft, bis der ausgetragene Faser-Kunststoff-Strang eine glatte Oberfläche aufweist.

Gemäß einem ersten Aspekt der Erfindung kann das erste und/oder zweite Massestrom-Soll-Verhältnis eingestellt und vorzugsweise geregelt werden, indem die Geschwindigkeit v, mit der die Faserstränge in den Einschnecken-Extruder zugeführt werden, und/oder die Drehzahl n der Schnecke und/oder der Massestrom dmK/dt an Kunststoffmaterial, welcher in den Einschnecken-Extruder zugeführt wird, eingestellt und vorzugsweise so geregelt werden, dass sie in einem Verhältnis zueinander stehen, bei welchem das Massestrom-Soll-Verhältnis vorliegt.

Gemäß einem weiteren Aspekt der Erfindung kann eine Düse mit variablem Düsenquerschnitt verwendet werden, wobei der Düsenquerschnitt derart eingestellt und vorzugsweise derart geregelt wird, dass das erste und/oder zweite Massestrom-Soll-Verhältnis vorliegt.

Bevorzugt kann das faserverstärkte Plastifikat zur additiven Fertigung eines faserverstärkten Kunststoffbauteils verwendet wird. Wenn ausschließlich das erfindungsgemäß erzeugte Plastifikat verwendet wird, d.h. ausschließlich endlosfaserverstärktes Plastifikat, können endlosfaserverstärkte Kunststoffbauteile im 3D-Druck-Verfahren hergestellt werden.

Es kann jedoch auch Anwendungsfälle geben, wo Teile des Kunststoffbauteils nicht mit einer Faserverstärkung versehen sein müssen oder sollen. In diesem Falle wird sowohl endlosfaserverstärktes Plastifikat als auch nicht verstärktes Plastifikat, d.h. reine Kunststoffschmelze, bei der additiven Fertigung benötigt. Gemäß einem weiteren Gedanken der vorliegenden Erfindung kann daher die Zufuhr von Fasersträngen für einen oder mehrere vorgebbare Zeitabschnitte unterbrochen werden, und in diesen Zeitabschnitten kann ausschließlich Kunststoffschmelze aus der Düse ausgetragen werden.

Vorzugsweise können hierbei mittels einer an der Düse angeordneten Schneidvorrichtung die Faserstränge zu Beginn eines vorgebbaren Zeitabschnitts abgeschnitten und die weitere Zufuhr von Fasersträngen in den Einschnecken-Extruder für die Dauer dieses Zeitabschnitts angehalten werden, so dass für die Dauer dieses Zeitabschnitts ausschließlich Kunststoffschmelze aus der Düse ausgetragen wird.

Eine erfindungsgemäße Vorrichtung umfasst:
- einen Einschnecken-Extruder mit einem Zylinder und einer darin drehbar gelagerten und mit einer variablen Drehzahl antreibbaren Schnecke,
- eine erste Einfüllöffnung in dem Zylinder für die Zufuhr eines Kunststoffmaterials in den Einschnecken-Extruder,
- eine zweite Einfüllöffnung in dem Zylinder für die Zufuhr eines Massestroms dmF/dt von einem oder mehreren endlosen Fasersträngen in den Einschnecken-Extruder, wobei die zweite Einfüllöffnung förderabseitig von der ersten Einfüllöffnung angeordnet ist,
- eine Faserzufuhrvorrichtung, die dazu ausgebildet ist, einen oder mehrere endlose Faserstränge mit einer vorgebbaren Faserzufuhrgeschwindigkeit in die zweite Einfüllöffnung einzubringen,
- eine am förderabseitigen Ende des Zylinders angeordnete Düse, über welche ein Gemisch aus Fasersträngen und Kunststoffschmelze als faserverstärktes Plastifikat ausgetragen werden kann, und
- eine Steuereinheit, die dazu ausgebildet ist, über vorgebbare Zeitabschnitte den Massestrom dmF/dt in einem ersten Massestrom-Soll-Verhältnis zu einem

Massestrom dmS/dt von aus der Düse austretender Kunststoffschmelze (29) und/oder über vorgebbare Zeitabschnitte den Massestrom dmF/dt in einem zweiten Massestrom-Soll-Verhältnis zu einem Massestrom dmP/dt von aus der Düse austretendem faserverstärktem Plastifikat zu halten, bei welchem die aus der Düse austretenden endlosen Faserstränge im Wesentlichen vollständig mit Kunststoffschmelze getränkt sind,
- wobei die Schnecke förderabseitig von der zweiten Einfüllöffnung einen Abschnitt mit einer Schneckengeometrie ausgebildet ist, bei welcher die endlosen Faserstränge im Wesentlichen unbeschädigt aus der Düse austreten können.

Bevorzugt ist der Schneckenabschnitt förderabseitig von der zweiten Einfüllöffnung als reine Förderschnecke ausgebildet und weist eine Schneckenwelle mit einem schraubenförmig umlaufenden Schneckensteg auf, wobei eine konstante Gangtiefe, eine konstante Gangbreite und eine konstante Stegbreite vorgesehen sind. Um die Fasern besonders effizient mit Kunststoffschmelze durchtränken zu können, kann der Schneckenabschnitt förderabseitig von der zweiten Einfüllöffnung eine Schneckenstegform aufweisen, bei der die treibende Flanke gegenüber der Mantelfläche des Schneckenstegs angefast oder abgerundet ist. Auf diese Weise wird zwischen dem Schneckensteg und der Zylinderinnenwand ein Druckgradient erzeugt, der das Eindringen des Kunststoffs in die Faserzwischenräume erleichtert. Um die Fasern während der Verarbeitung möglichst nicht zu verkürzen, weist der Schneckenabschnitt förderabseitig von der zweiten Einfüllöffnung ein Spaltmaß auf, das zumindest der Dicke des zugeführten Faserstrangs entspricht, bevorzugt jedoch einen Wert zwischen 0,5 mm und 2,5 mm annimmt. Um Faserbruch zu vermeiden, können die Übergänge der jeweiligen Flächen des Schneckenstegs (treibende Flanke, Mantelfläche, ggf. Fase, passive Flanke) verrundet ausgeführt sein.

Gemäß einem Aspekt der Erfindung kann die Steuereinheit insbesondere dazu ausgebildet sein, den Betrag der Faserzuführgeschwindigkeit v und/oder den Betrag der Drehzahl n der Schnecke derart steuern und vorzugsweise derart regeln zu können, dass das erste und/oder das zweite Massestrom-Soll-Verhältnis auf einem vorgebbaren Wert konstant gehalten werden kann.

Gemäß einem weiteren Aspekt der Erfindung kann eine Dosiereinheit vorgesehen sein, die ausgebildet ist, um einen vorgebbaren Massestrom dmK/dt an Kunststoffmaterial in die erste Einfüllöffnung einzugeben. Die Steuereinheit kann dann zusätzlich dazu ausgebildet sein, den Betrag des Massestroms dmK/dt an Kunststoffmaterial an der Dosiereinheit derart zu steuern und vorzugsweise derart zu regeln, dass das erste und/oder zweite Massestrom-Soll-Verhältnis auf einem vorgebbaren Wert konstant gehalten werden kann.

In Weiterbildung der Erfindung kann die Düse einen variablen Düsenquerschnitt aufweisen. Die Steuereinheit kann in diesem Fall zusätzlich dazu ausgebildet sein, den Düsenquerschnitt derart steuern und vorzugsweise derart regeln zu können, dass das erste und/oder zweite Massestrom-Soll-Verhältnis auf einem vorgebbaren Wert konstant gehalten werden kann.

Ferner kann an der Düse eine Schneidvorrichtung vorgesehen ein, mit welcher die aus der Düse austretenden Faserstränge abgeschnitten werden können. Damit wird es möglich, dass die Faserstränge zu Beginn eines vorgebbaren Zeitabschnitts abgeschnitten und die weitere Zufuhr von Fasersträngen in den Einschnecken-Extruder für die Dauer dieses Zeitabschnitts angehalten werden, so dass für die Dauer dieses Zeitabschnitts ausschließlich Kunststoffschmelze aus der Düse ausgetragen wird. Gegebenenfalls kann es auch erforderlich oder sinnvoll sein, die aus der Düse austretenden Faserstränge zu durchschneiden und den Austrag von endlosfaserverstärktem Plastifikat kurzfristig zu stoppen, beispielsweise um nachfolgend an einer anderen Position mit der additiven Herstellung des endlosfaserverstärkten Kunststoffbauteils fortzufahren. Letztendlich hängt es davon ab, wie das Plastifikat bei der Herstellung eines endlosfaserverstärkten Kunststoffbauteils verlegt werden soll.

Erfindungsgemäß ist somit auch die Verwendung einer erfindungsgemäßen Vorrichtung zur additiven Fertigung eines endlosfaserverstärkten Kunststoffbauteils vorgesehen, wobei die Vorrichtung an einem Mehrachs-Industrieroboter angebracht ist, mit dem die Düse über eine Unterlage bewegt und ein Strang aus endlosfaserverstärktem Plastifikat auf der Unterlage abgelegt werden kann. Gegebenenfalls kann sowohl endlosfaserverstärktes Plastifikat als auch nicht verstärktes Plastifikat bei der additiven Fertigung verwendet werden. Zu diesem Zweck kann die Zufuhr von Fasersträngen für einen oder mehrere vorgebbare Zeitabschnitte unterbrochen werden, und in diesen Zeitabschnitten ausschließlich Kunststoffschmelze aus der Düse ausgetragen werden.

Bei der Verwendung einer erfindungsgemäßen Vorrichtung zur additiven Fertigung eines endlosfaserverstärkten Kunststoffbauteils kann eine Unterlage vorgesehen sein, auf der ein Strang von aus der Düse austretendem Plastifikat abgelegt werden kann, wobei die Unterlage in einer oder mehreren Richtungen im Raum verfahren werden kann.

Gegebenenfalls kann eine im Raum verfahrbare Unterlage auch zusammen mit einer an einem Mehrachs-Industrieroboter angebrachten erfindungsgemäßen Vorrichtung verwendet werden. Vorzugsweise kann die Unterlagen in einer oder mehreren Richtungen (x, y, z) im Raum verfahren werden kann.

Vorzugsweise sind die Faserzuführgeschwindigkeit und die Relativgeschwindigkeit zwischen der Düse und dem Ablagepunkt des Strangs im Wesentlichen identisch. Bei zu geringer Faserzufuhrgeschwindigkeit kann es zu einem Abreißen von Fasersträngen kommen. Bei zu hoher Faserzuführgeschwindigkeit kann zur Bildung von Materialstau auf der Unterlage kommen.

Gegebenenfalls können mehrere erfindungsgemäße Vorrichtungen gleichzeitig verwendet werden. Der Austrag von faserverstärktem Plastifikat kann dann aus einer der Vorrichtungen oder gleichzeitig aus mehreren Vorrichtungen vorgenommen werden. Die Vorrichtungen können dabei so betrieben werden, dass je nach herzustellendem faserverstärktem Kunststoff-Bauteil gleiche oder unterschiedlich ausgebildete Vorrichtungen verwendet werden, die entsprechend dem gewünschten Kunststoff-Bauteil jeweils abwechselnd bzw. nacheinander oder zu mehreren gleichzeitig betrieben werden. Hierbei können Faserstränge aus unterschiedlichem Fasermaterial und/oder unterschiedliches Kunststoffmaterial verwendet werden.

Die Erfindung weist eine Reihe von Vorteilen gegenüber dem Stand der Technik auf, von denen nachfolgend einige aufgezählt werden sollen.

Anstelle von teurem Halbzeug (UD-Tape) können kostengünstige Standardmaterialien verwendet werden, nämlich handelsübliche Faserstränge auf Spulen - sogenannte Faserrovings - und handelsübliches Kunststoffgranulat.

Eine direkte Ablage des endlosfaserverstärkten Plastifikats ermöglicht zudem eine gezielte Anpassung des Faserstrangs in Abhängigkeit von der Bauteilgeometrie. Eine lastpfadgerechte Verstärkung eines Kunststoffbauteils ist somit kostengünstig umsetzbar. Dadurch ergibt sich auch ein hohes Leichtbaupotential, da die Faserverstärkung nur dort vorgenommen wird, wo sie benötigt wird.

Ferner können die Art des Fasermaterials und die Art des Kunststoffs, d.h. das Matrixmaterials, nahezu frei gewählt werden. Dadurch ergibt sich ein hohes Maß an Flexibilität in Bezug auf die Materialkombinationen bei der additiven Fertigung von faserverstärkten Kunststoffbauteilen.

Wenn ein Kunststoffbauteil sowohl aus faserverstärkten Bestandteilen als auch aus nicht faserverstärkten Bestandteilen aufgebaut sein soll, kann mittels der Erfindung eine gute Anbindung zwischen beiden Bestandteilen erzielt werden, weil identisches Matrixmaterial bzw. Kunststoffmaterial sowohl für den faserverstärkten Bestandteil des Bauteils als auch für die Stützstruktur (d.h. den nicht verstärkten Bestandteil des Bauteils) verwendet wird.

Nachfolgend soll die Erfindung anhand eines Ausführungsbeispiels und unter Bezugnahme auf die Figuren näher beschrieben werden. Es zeigen:
- Figur 1: perspektivische Darstellung einer erfindungsgemäßen Vorrichtung mit Teilschnitt des Extruders;
- Figur 2: vergrößerte Darstellung des Abschnitts 30 aus der Figur 1;
- Figuren 2a - 2d: vergrößerte Darstellung des Bereichs X aus der Figur 2 mit verschiedenen Ausführungsformen des Schneckenstegs
- Figur 3a: Austrag mit höherem Kunststoffanteil als Faseranteil;
- Figur 3b: Austrag mit höherem Faseranteil als Kunststoffanteil ;
- Figur 3c: Austrag mit richtigem Verhältnis von Massestrom an Fasermaterial und Massestrom an Kunststoffschmelze.

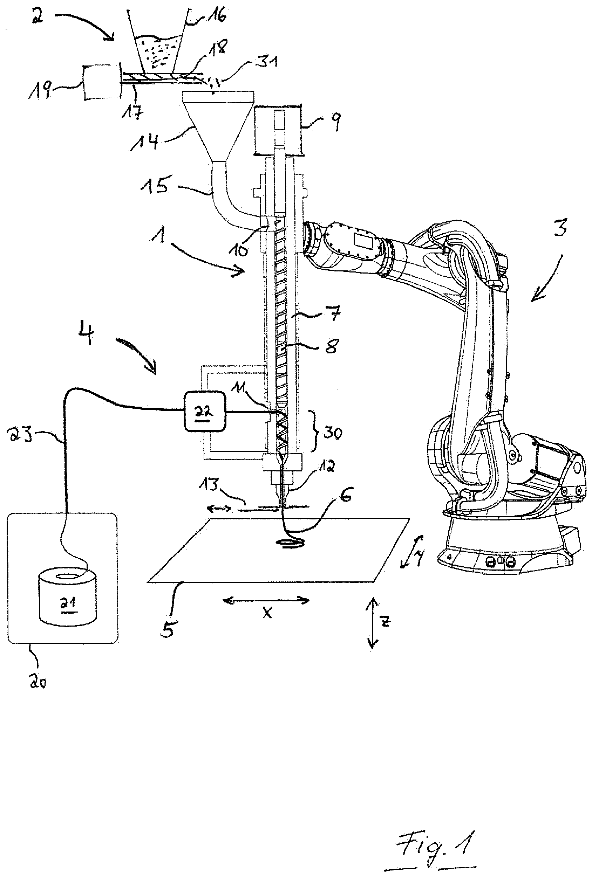

Die Figur 1 zeigt eine Anlage zur additiven Fertigung von endlosfaserverstärkten Kunststoffbauteilen. Man kann die Anlage auch als 3D-Drucker für die Herstellung von endlosfaserverstärkten Kunststoffbauteilen bezeichnen. Sie umfasst einen Einschnecken-Extruder 1, eine Dosiereinheit 2, einen Mehrachs-Industrieroboter 3, eine Faserzuführvorrichtung 4 und eine Unterlage 5, auf der ein imprägnierter Faserstrang 6 abgelegt werden kann. Mittels des Mehrachs-Industrieroboters 3 kann der Einschnecken-Extruder 1 in beliebige Positionen im Raum verfahren werden. In der Darstellung der Figur 1 ist der Einschnecken-Extruder 1 vertikal ausgerichtet. Der Einschnecken-Extruder 1 umfasst einen Zylinder 7 und eine darin drehbar gelagerte Schnecke 8, die von einem Drehantrieb 9 mit einer variablen und regelbaren Drehzahl angetrieben werden kann. Am hinteren Ende der Schnecke 8 ist eine erste Einfüllöffnung 10 in dem Zylinder 7 für die Zufuhr eines Kunststoffmaterials in den Einschnecken-Extruder 1 vorgesehen. Förderabseitig von der ersten Einfüllöffnung 10 ist eine zweite Einfüllöffnung 11 für die Zufuhr von einem oder mehreren Fasersträngen vorgesehen. Am förderabseitigen Ende des Zylinders 7 sind eine Düse 12 und eine Schneidvorrichtung 13 angeordnet. Die Düse 12 kann so ausgebildet sein, dass sie einen variablen Düsenquerschnitt aufweist. Hierzu kann die Düse 12 beispielsweise vergleichbar mit einer Blende eines Fotoapparats eine Vielzahl von kreisförmig angeordneten, ineinandergreifenden Lamellen aufweisen. Durch die gleichzeitige Veränderung der Anstellwinkel der Lamellen kann der Fließquerschnitt vergrößert oder verkleinert werden. Mittels der Schneidvorrichtung 13 kann ein imprägnierter Faserstrang 6 abgeschnitten werden. Gegebenenfalls kann die Schneidvorrichtung 13 auch mit einem Dichtelement ausgestattet sein, um die Austrittsöffnung der Düse 12 für eine kurze Zeit verschließen zu können, beispielsweise wenn der Austrag an einer Position gestoppt und an einer anderen Position fortgesetzt werden soll. Die Zufuhr von Kunststoffmaterial in den Zylinder 7 erfolgt über einen Einfülltrichter 14 und ein Rohr 15. Das Kunststoffmaterial wird vorzugsweise mittels der Dosiereinheit 2 in den Einfülltrichter 14 eingegeben. Die Dosiereinheit 2 umfasst einen Materialtrichter 16, einen Förderzylinder 17, eine Förderschnecke 18 und einen Dosierantrieb 19. Die Faserzuführvorrichtung 4 umfasst einen Faservorratsbehälter 20 mit einer oder mehreren Faserspulen 21 und eine Faserbremseinrichtung 22. Mittels der Faserbremseinrichtung 22 kann die Geschwindigkeit v geregelt werden, mit welcher ein Faserstrang 23 über die Einfüllöffnung 11 in den Zylinder 7 eingezogen wird. Die Unterlage 5 kann gegebenenfalls im Raum verfahren werden, wie dies mit den Pfeilen x, y und z angedeutet ist. Eine solche Positioniervorrichtung ist für sich genommen bekannt und braucht daher an dieser Stelle nicht näher beschrieben zu werden.

Die Schnecke 8 kann in dem Bereich zwischen der ersten Einfüllöffnung 10 und der zweiten Einfüllöffnung 11 in an sich bekannter Weise ausgebildet sein, um das zugeführte Kunststoffmaterial aufschmelzen und in Richtung der Düse 12 fördern zu können. Hier können vielfältige aus dem Stand der Technik bekannte Ausführungsformen an Schnecken verwendet werden. Es kommt lediglich darauf an, dass das Kunststoffmaterial bei Erreichen der zweiten Einfüllöffnung 11 ausreichend aufgeschmolzen ist, so dass der Faserstrang 23 in die Kunststoffschmelze eingegeben und mit Kunststoffschmelze getränkt werden kann.

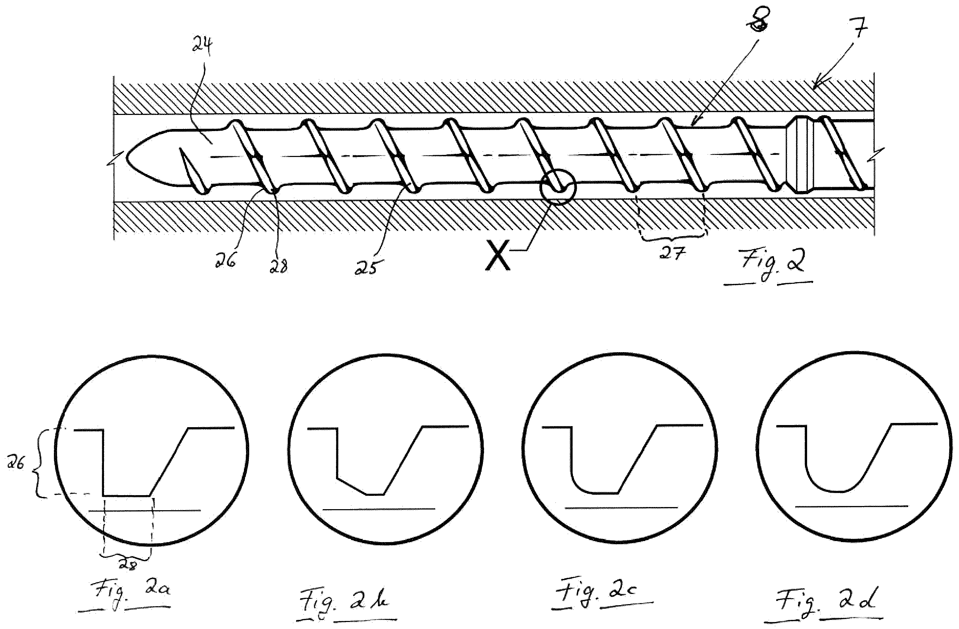

Förderabseitig von der zweiten Einfüllöffnung 11 ist die Schnecke 8 als reine Förderschnecke ausgebildet, wie dies in der Figur 2 in einem vergrößerten Maßstab zu sehen ist. Insbesondere ist die Schnecke 8 in diesem Bereich als Schneckenwelle 24 mit einem schraubenförmig umlaufenden Schneckensteg 25 ausgebildet. Die Schnecke 8 verfügt in diesem Bereich über eine konstante Gangtiefe 26 (siehe Figur 2a), eine konstante Gangbreite 27 und eine konstante Stegbreite 28. Mit dieser Ausgestaltung der Schnecke 8 wird - zusammen mit dem unten näher beschriebenen Betrieb des Einschnecken-Extruders 1 - sichergestellt, dass der Faserstrang 23 im Wesentlichen unbeschädigt aus der Düse 12 ausgetragen werden kann. Um die Fasern besonders effizient mit Kunststoffschmelze durchtränken zu können, kann der Schneckenabschnitt förderabseitig von der zweiten Einfüllöffnung eine Schneckenstegform aufweisen, bei der die treibende Flanke gegenüber der Mantelfläche des Schneckenstegs angefast (Figur 2b) oder abgerundet (Figur 2c) ist. Auf diese Weise wird zwischen dem Schneckensteg und der Zylinderinnenwand ein Druckgradient erzeugt, der das Eindringen des Kunststoffs in die Faserzwischenräume erleichtert. Um die Fasern während der Verarbeitung möglichst nicht zu verkürzen, weist der Schneckenabschnitt förderabseitig von der zweiten Einfüllöffnung ein Spaltmaß auf, das zumindest der Dicke des zugeführten Faserstrangs entspricht, bevorzugt jedoch einen Wert zwischen 0,5 mm und 2,5 mm annimmt (Figur 2, 2a, 2b, 2c, 2d). Um Faserbruch zu vermeiden, können die Übergänge der jeweiligen Flächen des Schneckenstegs (treibende Flanke, Mantelfläche, ggf. Fase, passive Flanke) verrundet sein (Figur 2d).

Nachfolgend soll der Betrieb der in den Figuren 1 und 2 dargestellten Anlage beschrieben werden. Mittels der Dosiereinheit 2 kann eine geregelte Zufuhr an Kunststoffmaterial in den Zylinder 7 erfolgen, indem der Massestrom dmK/dt an Kunststoffmaterial, welcher dem Zylinder 7 zugeführt wird, mittels des Dosierantriebs 19 geregelt wird. Mit dem Drehantrieb 9 kann die Drehzahl n der Schnecke 7 geregelt werden. Mittels der Faserbremseinrichtung 22 kann die Geschwindigkeit v geregelt werden, mit der der Faserstrang 23 in den Zylinder 7 und somit in die Kunststoffschmelze eingegeben wird. Beim Austritt aus der Düse liegt somit ein Massestrom dmF/dt von aus der Düse 12 austretendem Faserstrang und ein Massestrom dmS/dt von aus der Düse 12 austretender Kunststoffschmelze vor. Mittels der Stellgrößen "Massestrom dmK/dt an Kunststoffmaterial" und "Drehzahl n der Schnecke" kann der Massestrom dmS/dt von aus der Düse 12 austretender Kunststoffschmelze geregelt werden. Mittels der Faserbremseinrichtung 22 kann der Massestrom dmF/dt von aus der Düse 12 austretendem Faserstrang geregelt werden. Gemäß einem Kerngedanken der vorliegenden Erfindung wird ein Betriebszustand eingestellt und vorzugsweise auch geregelt, bei welchem der Massestrom dmF/dt von aus der Düse 12 austretendem Fasersträngen (in der Figur 1 nur ein einziger Faserstrang ) und der Massestrom dmS/dt von aus der Düse austretender Kunststoffschmelze in einem solchen Verhältnis zueinander stehen, dass die aus der Düse 12 austretenden Faserstränge, vorliegend also der Faserstrang 6, im Wesentlichen vollständig von Kunststoffschmelze getränkt sind. Dieses Verhältnis stellt ein Massestrom-Soll-Verhältnis dar, welches im Wesentlichen konstant gehalten werden soll, um gute Ergebnisse bei der additiven Fertigung eines endlosfaserverstärkten Kunststoffbauteils zu erzielen. Beim Betrieb der Anlagen mit dem Massestrom-Soll-Verhältnis wird ein endlosfaserverstärktes Plastifikat aus der Düse 12 ausgetragen, welches sich besonders gut für die additive Fertigung eines endlosfaserverstärkten Kunststoffbauteils eignet.

In den Figuren 3a bis 3c ist dargestellt, wie das endlosfaserverstärkte Plastifikat 32 bei unterschiedlichen Betriebszustanden der Anlage aus der Düse 12 ausgetragen wird. Die Figur 3a zeigt einen Zustand, bei welchem mehr Kunststoffschmelze als Fasermaterial ausgetragen wird und die Figur 3b zeigt einen Zustand, bei welchem mehr Fasermaterial als Kunststoffschmelze ausgetragen wird. In der Figur 3c ist ein Zustand dargestellt, in welchem das Massestrom-Soll-Verhältnis vorliegt. In der Figur 3a ist der Faserstrang 6 nicht nur mit Kunststoffschmelze 29 getränkt, sondern es wird um den Faserstrang 6 herum zusätzliche Kunststoffschmelze 29 ausgetragen. In der Figur 3b wird nur ein unvollständig getränkter Faserstrang 6 ausgetragen. Dies soll durch die nicht durchgehend schwarze Darstellung des Faserstrangs 6 angedeutet werden. In der Figur 3c wird ein vollständig mit Kunststoffschmelze 29 getränkter Faserstrang 6 ausgetragen. Der besseren Übersicht halber ist in der Figur 3c der Faserstrang 6 als mit Kunststoffschmelze 29 ummantelt dargestellt. In der Realität wird der Faserstrang 6 jedoch von Kunststoffschmelze durchdrungen. Man kann auch sagen, dass der Faserstrang 6 in der Figur 3c vollständig mit Kunststoffschmelze 29 getränkt ist. Im Idealfall ist eine dünne Oberflächenschicht aus reinem Kunststoffmaterial 29 vorhanden, welche den getränkten Faserstrang 6 umgibt.

Mittels des erfindungsgemäßen Verfahrens wird somit verhindert, dass mehr Kunststoffschmelze als Fasermaterial (Figur 3a) oder mehr Fasermaterial als Kunststoffschmelze (Figur 3b) als gewünscht aus der Düse 12 ausgetragen wird.

Wenn lediglich ein einziger mit Kunststoffschmelze getränkter endloser Faserstrang aus der Düse ausgetragen werden soll, kann die Einstellung des Massestrom-Soll-Verhältnisses derart erfolgen, dass der aus der Düse austretende Faserstrang eine glatte und mit Kunststoffschmelze überzogene Oberfläche aufweist.

Das Massestrom-Soll-Verhältnis kann vorzugsweise in einer vorgeschalteten Lernphase ermittelt werden.

Falls eine Düse 12 mit einem variablen Düsenquerschnitt zum Einsatz kommt, kann auch der Düsenquerschnitt als Stellgröße für das Massestrom-Soll-Verhältnis verwendet werden. Hierbei wird der Düsenquerschnitt derart eingestellt und geregelt, dass das Massestrom-Soll-Verhältnis vorliegt.

Für die additive Herstellung eines endlosfaserverstärkten Kunststoffbauteils kann die Düse 12 relativ zur Unterlage 5 gemäß einem vorgegebenen Programm verfahren werden. Hierzu kann die Unterlage 5 und/oder der Einschnecken-Extruder 1 im Raum so verfahren werden, dass das endlosfaserverstärkte Plastifikat 32 bzw. der getränkte endlose Faserstrang 6 gemäß den Daten des Kunststoffbauteils auf der Unterlage 5 abgelegt wird.

Falls ein Kunststoffbauteil hergestellt werden soll, wo Teile des Kunststoffbauteils nicht mit einer Faserverstärkung versehen sein müssen oder sollen, wird sowohl endlosfaserverstärktes Plastifikat 32 als auch nicht verstärktes Plastifikat, d.h. reine Kunststoffschmelze 29, aus der Düse 12 ausgetragen. Hierfür kann die Zufuhr des Faserstrangs 23 für einen oder mehrere vorgebbare Zeitabschnitte unterbrochen werden, und in diesen Zeitabschnitten kann ausschließlich Kunststoffschmelze 29 aus der Düse 12 ausgetragen werden. Das Abschneiden des Faserstrangs 6 kann mittels der an der Düse 12 angeordneten Schneidvorrichtung 13 erfolgen. Der Faserstrang 6 wird zu Beginn eines vorgebbaren Zeitabschnitts abgeschnitten und die weitere Zufuhr von Faserstrang 23 in den Einschnecken-Extruder 1 wird für die Dauer dieses Zeitabschnitts angehalten, so dass für die Dauer dieses Zeitabschnitts ausschließlich Kunststoffschmelze 29 aus der Düse 12 ausgetragen wird.

Ja nach Anwendungsfall kann lediglich ein einzelner trockener Faserstrang 23 verwendet werden, wie dies in dem Ausführungsbeispiels der Figur 1 der Fall ist. Dabei kann das Massestrom-Soll-Verhältnis derart eingestellt und vorzugsweise geregelt werden, dass der aus der Düse 12 austretende imprägnierte Faserstrang 6 eine glatte und mit Kunststoffschmelze 29 überzogene Oberfläche aufweist.

### Bezugszeichenliste

- 1: Einschnecken-Extruder
- 2: Dosiereinheit
- 3: Mehrachs-Industrieroboter
- 4: Faserzufuhrvorrichtung
- 5: Unterlage
- 6: Faserstrang - imprägniert
- 7: Zylinder
- 8: Schnecke
- 9: Drehantrieb
- 10: Erste Einfüllöffnung für Kunststoffmaterial
- 11: Zweite Einfüllöffnung für Fasermaterial
- 12: Düse
- 13: Schneidvorrichtung
- 14: Einfülltrichter
- 15: Rohr
- 16: Materialtrichter
- 17: Förderzylinder
- 18: Förderschnecke
- 19: Dosierantrieb
- 20: Faservorratsbehälter
- 21: Faserspule
- 22: Faserbremseinrichtung
- 23: Faserstrang
- 24: Schneckenwelle
- 25: Schneckensteg
- 26: Gangtiefe
- 27: Gangbreite
- 28: Stegbreite
- 29: Kunststoffschmelze
- 30: Förderschnecke
- 31: Kunststoffgranulat
- 32: Faserverstärktes Plastifikat

## Patentansprüche

1. Verfahren zur Herstellung eines faserverstärkten Plastifikats mittels eines Einschnecken-Extruders (1), aufweisend einen Zylinder (7) und eine darin drehbar gelagerte Schnecke (8), wobei ein Kunststoffmaterial (31) über eine erste Einfüllöffnung (10) in dem Zylinder (7) in den Einschnecken-Extruder (1) zugeführt und darin zu einer Kunststoffschmelze aufgeschmolzen wird, wobei förderabseitig von der ersten Einfüllöffnung (10) ein Massestrom dmF/dt von einem oder mehreren endlosen Fasersträngen (23) über eine zweite Einfüllöffnung (11) in dem Zylinder (7) in den Einschnecken-Extruder (1) eingeführt wird, wobei im Bereich der zweiten Einfüllöffnung (11) das Kunststoffmaterial (31) als Kunststoffschmelze vorliegt, wobei die endlosen Faserstränge (23) in trockenem Zustand in die Kunststoffschmelze eingegeben und mit Kunststoffschmelze getränkt werden, wobei das Gemisch aus Fasersträngen und Kunststoffschmelze aus einer am förderabseitigen Ende des Zylinders (7) befindlichen Düse (12) als faserverstärktes Plastifikat (32) ausgetragen wird, wobei eine Schnecke (8) verwendet wird, die förderabseitig von der zweiten Einfüllöffnung (11) eine Schneckengeometrie aufweist, derart, dass die zugeführten endlosen Faserstränge (23) im Wesentlichen unbeschädigt und mit Kunststoffschmelze (29) getränkt aus der Düse (12) austreten, wobei ein Massestrom dmS/dt von aus der Düse austretender Kunststoffschmelze und ein Massestrom dmP/dt von aus der Düse austretendem faserverstärktem Plastifikat (32) vorliegen, wobei der Massestrom dmF/dt und der Massestrom dmS/dt in einem ersten Verhältnis zueinander stehen, bei welchem die aus der Düse (12) austretenden endlosen Faserstränge (6) im Wesentlichen vollständig mit Kunststoffschmelze getränkt sind, wobei dieses erste Verhältnis ein erstes Massestrom-Soll-Verhältnis darstellt, welches über vorgebbare Zeitabschnitte im Wesentlichen konstant gehalten wird, und/oder wobei der Massestrom dmF/dt und der Massestrom dmP/dt in einem zweiten Verhältnis zueinander stehen, bei welchem die aus der Düse (12) austretenden endlosen Faserstränge (6) im Wesentlichen vollständig mit Kunststoffschmelze getränkt sind, wobei das zweite Verhältnis ein zweites Massestrom-Soll-Verhältnis darstellt, welches über vorgebbare Zeitabschnitte im Wesentlichen konstant gehalten wird.

2. Verfahren nach Anspruch 1,
**dadurch gekennzeichnet, dass**
das erste Massestrom-Soll-Verhältnis oder das zweite Massestrom-Soll-Verhältnis in einer vorgeschalteten Lernphase ermittelt wird.

3. Verfahren nach Anspruch 1 oder 2,
**dadurch gekennzeichnet, dass**
das erste oder das zweite Massestrom-Soll-Verhältnis eingestellt und vorzugsweise geregelt wird, indem die Geschwindigkeit v, mit der die Faserstränge (23) in den Einschnecken-Extruder (1) zugeführt werden, und/oder die Drehzahl n der Schnecke (7) und/oder der Massestrom dmK/dt an Kunststoffmaterial (31), welcher in den Einschnecken-Extruder (1) zugeführt wird, derart eingestellt und vorzugsweise derart geregelt werden, dass sie in einem Verhältnis zueinander stehen, bei welchem das Massestrom-Soll-Verhältnis vorliegt.

4. Verfahren nach einem der vorstehenden Ansprüche,
**dadurch gekennzeichnet, dass**
eine Düse (12) mit variablem Düsenquerschnitt verwendet wird und dass der Düsenquerschnitt derart eingestellt und vorzugsweise derart geregelt wird, dass das erste oder zweite Massestrom-Soll-Verhältnis vorliegt.

5. Verfahren nach einem der vorstehenden Ansprüche,
**dadurch gekennzeichnet, dass**
das faserverstärkte Plastifikat (32) zur additiven Fertigung eines faserverstärkten Kunststoffbauteils verwendet wird.

6. Verfahren nach Anspruch 5,
**dadurch gekennzeichnet, dass**
die Zufuhr von Fasersträngen (23) für einen oder mehrere vorgebbare Zeitabschnitte unterbrochen und in diesen Zeitabschnitten ausschließlich Kunststoffschmelze (29) aus der Düse (12) ausgetragen wird, wobei das erste oder zweite Massestrom-Soll-Verhältnis lediglich bei der Zufuhr von Fasersträngen (23) vorliegt.

7. Verfahren nach Anspruch 6,
**dadurch gekennzeichnet, dass**
mittels einer an der Düse (12) angeordneten Schneidvorrichtung (13) die getränkten Faserstränge (6) zu Beginn eines vorgebbaren Zeitabschnitts abgeschnitten und die weitere Zufuhr von trockenen Fasersträngen (23) in den Einschnecken-Extruder (1) für die Dauer dieses Zeitabschnitts angehalten wird, so dass für die Dauer dieses Zeitabschnitts ausschließlich Kunststoffschmelze (29) aus der Düse (12) ausgetragen wird.

8. Verfahren nach einem der vorstehenden Ansprüche,
**dadurch gekennzeichnet, dass**
mehrere Faserstränge (23) verwendet werden und dass das erste oder zweite Massestrom-Soll-Verhältnis derart eingestellt und vorzugsweise derart geregelt ist, dass die aus der Düse (12) austretenden getränkten Faserstränge (6) jeweils eine mit Kunststoffschmelze (29) überzogene, vorzugsweise glatte, Oberfläche aufweisen.

9. Verfahren nach einem der Ansprüche 1 bis 7,
**dadurch gekennzeichnet, dass**
ein einzelner Faserstrang (23) verwendet wird und dass das erste oder zweite Massestrom-Soll-Verhältnis derart eingestellt und vorzugsweise geregelt wird, dass der aus der Düse (12) austretende getränkte Faserstrang (6) eine mit Kunststoffschmelze (29) überzogene, vorzugsweise glatte, Oberfläche aufweist.

10. Vorrichtung zur Durchführung des Verfahrens nach einem der Ansprüche 1 bis 9 umfassend:
- einen Einschnecken-Extruder (1) mit einem Zylinder (7) und einer darin drehbar gelagerten und mit einer variablen Drehzahl antreibbaren Schnecke (8),
- eine erste Einfüllöffnung (10) in dem Zylinder (7) für die Zufuhr eines Kunststoffmaterials (31) in den Einschnecken-Extruder (1),
- eine zweite Einfüllöffnung (11) in dem Zylinder (7) für die Zufuhr eines Massestroms dmF/dt von einem oder mehreren endlosen Fasersträngen (23) in den Einschnecken-Extruder (1), wobei die zweite Einfüllöffnung (11) förderabseitig von der ersten Einfüllöffnung (10) angeordnet ist,
- eine Faserzufuhrvorrichtung (4), die dazu ausgebildet ist, einen oder mehrere endlose Faserstränge (23) mit einer vorgebbaren Faserzufuhrgeschwindigkeit in die zweite Einfüllöffnung (11) einzubringen,
- eine am förderabseitigen Ende des Zylinders (7) angeordnete Düse (12), über welche ein Gemisch aus Fasersträngen und Kunststoffschmelze als faserverstärktes Plastifikat (32) ausgetragen werden kann, und
- eine Steuereinheit, die dazu ausgebildet ist, über vorgebbare Zeitabschnitte den Massestrom dmF/dt in einem ersten Massestrom-Soll-Verhältnis zu einem Massestrom dmS/dt von aus der Düse (12) austretender Kunststoffschmelze (29) oder über vorgebbare Zeitabschnitte den Massestrom dmF/dt in einem zweiten Massestrom-Soll-Verhältnis zu einem Massestrom dmP/dt von aus der Düse austretendem faserverstärktem Plastifikat (32) zu halten, bei welchem die aus der Düse (12) austretenden endlosen Faserstränge (6) im Wesentlichen vollständig mit Kunststoffschmelze getränkt sind,
- wobei die Schnecke (8) förderabseitig von der zweiten Einfüllöffnung (11) einen Abschnitt (30) mit einer Schneckengeometrie ausgebildet ist, bei welcher die endlosen Faserstränge (23) im Wesentlichen unbeschädigt aus der Düse (12) austreten können.

11. Vorrichtung nach Anspruch 10,
**dadurch gekennzeichnet, dass**
der Schneckenabschnitt (30) als Förderschnecke (30) ausgebildet ist und eine Schneckenwelle (24) mit einem schraubenförmig umlaufenden Schneckensteg (25) aufweist, wobei eine konstante Gangtiefe (26), eine konstante Gangbreite (27) und eine konstante Stegbreite (28) vorgesehen sind.

12. Vorrichtung nach Anspruch 10 oder 11,
**dadurch gekennzeichnet, dass**
die Steuereinheit dazu ausgebildet ist, den Betrag der Faserzuführgeschwindigkeit v und/oder den Betrag der Drehzahl n der Schnecke (8) derart zu steuern und vorzugsweise derart zu regeln, dass das erste Massestrom-Soll-Verhältnis und/oder das zweite Massestrom-Soll-Verhältnis auf einem vorgebbaren Wert konstant gehalten werden kann.

13. Vorrichtung nach einem der vorstehenden Ansprüche,
**dadurch gekennzeichnet, dass**
eine Dosiereinheit (2) vorgesehen ist, die ausgebildet ist, um einen vorgebbaren Massestrom dmK/dt an Kunststoffmaterial (31) in die erste Einfüllöffnung einzugeben, und wobei die Steuereinheit dazu ausgebildet ist, den Betrag des Massestroms dmK/dt an Kunststoffmaterial (31) an der Dosiereinheit (2) derart zu steuern und vorzugsweise derart zu regeln, dass das erste und/oder zweite Massestrom-Soll-Verhältnis auf einem vorgebbaren Wert konstant gehalten werden kann.

14. Vorrichtung nach einem der vorstehenden Ansprüche,
**dadurch gekennzeichnet, dass**
die Düse (12) einen variablen Düsenquerschnitt aufweist und dass die Steuereinheit dazu ausgebildet ist, den Düsenquerschnitt derart zu steuern und vorzugsweise derart zu regeln, dass das erste und/oder zweite Massestrom-Soll-Verhältnis auf einem vorgebbaren Wert konstant gehalten werden kann.

15. Vorrichtung nach einem der vorstehenden Ansprüche,
**dadurch gekennzeichnet, dass**
an der Düse (12) eine Schneidvorrichtung (13) vorgesehen ist, mit welcher die aus der Düse (12) austretenden Faserstränge (6) abgeschnitten werden können.

16. Verwendung einer Vorrichtung nach einem der Ansprüche 10 bis 15 zur additiven Fertigung eines faserverstärkten Kunststoffbauteils, wobei die Vorrichtung an einem Mehrachs-Industrieroboter (3) angebracht ist, mit dem die Düse (12) über eine Unterlage (5) bewegt und ein Strang aus faserverstärktem Plastifikat (32) auf der Unterlage (5) abgelegt werden kann.

17. Verwendung einer Vorrichtung nach einem der Ansprüche 10 bis 15 zur additiven Fertigung eines faserverstärkten Kunststoffbauteils, wobei eine Unterlage (5) vorgesehen ist, auf der ein Strang von aus der Düse (12) austretendem faserverstärktem Plastifikat (32) abgelegt werden kann, wobei die Unterlage (5) in einer oder mehreren Richtungen (x, y, z) im Raum verfahren werden kann.

18. Verwendung nach Anspruch 16 oder 17,
**dadurch gekennzeichnet, dass**
die Faserzuführgeschwindigkeit und die Relativgeschwindigkeit zwischen der Düse (12) und dem Ablagepunkt des Strangs im Wesentlichen identisch sind.

## Claims

1. A method for producing a fibre-reinforced polymer melt by means of a single-screw extruder (1) having a cylinder (7) and a screw (8) rotatably mounted therein, wherein a plastic material (31) is supplied into the single-screw extruder (1) via a first filling opening (10) in the cylinder (7) and is melted therein to a plastic melt, wherein remote from the first filling opening (10), with respect to conveying, a mass flow dmF/dt of one or more continuous fibre strands (23) is introduced into the single-screw extruder (1) via a second filling opening (11) in the cylinder (7), wherein in the region of the second filling opening (11) the plastic material (31) is present as plastic melt, wherein the continuous fibre strands (23) are inputted in dry state into the plastic melt and are impregnated with plastic melt, wherein the mixture of fibre strands and plastic melt is delivered as fibre-reinforced polymer melt (32) out of a nozzle (12), situated at the end of the cylinder (7), remote with respect to conveying, wherein a screw (8) is used which, remote from the second filling opening (11) with respect to conveying, has a screw geometry such that the supplied continuous fibre strands (23) exit from the nozzle (12) substantially undamaged and impregnated with plastic melt (29), wherein a mass flow dmS/dt of plastic melt exiting from the nozzle and a mass flow dmP/dt of fibre-reinforced polymer melt (32), exiting from the nozzle, are present, wherein the mass flow dmF/dt and the mass flow dmS/dt are in a first ratio with respect to one another, in which the continuous fibre strands (6) exiting from the nozzle (12) are substantially entirely impregnated with plastic melt, wherein this first ratio represents a first mass flow target ratio which is kept substantially constant over predeterminable periods of time, and/or wherein the mass flow dmF/dt and the mass flow dmP/dt are in a second ratio with respect to one another, in which the continuous fibre strands (6) exiting from the nozzle (12) are substantially entirely impregnated with plastic melt, wherein the second ratio constitutes a second mass flow target ratio which is kept substantially constant over predeterminable periods of time.

2. The method according to Claim 1,
**characterized in that**
the first mass flow target ratio or the second mass flow target ratio is determined in an upstream learning phase.

3. The method according to Claim 1 or 2,
**characterized in that**
the first or the second mass flow target ratio is set and preferably regulated by the speed v at which the fibre strands (23) are supplied into the single-screw extruder (1), and/or the rotation speed n of the screw (7) and/or the mass flow dmK/dt of plastic material (31) which is supplied into the single-screw extruder (1), being set and preferably regulated such that they are in a ratio with respect to one another in which the mass flow target ratio is present.

4. The method according to one of the preceding claims,
**characterized in that**
a nozzle (12) with variable nozzle cross-section is used and that the nozzle cross-section is set and preferably regulated such that the first or second mass flow target ratio is present.

5. The method according to one of the preceding claims,
**characterized in that**
the fibre-reinforced polymer melt (32) is used for the additive manufacture of a fibre-reinforced plastic component.

6. The method according to Claim 5,
**characterized in that**
the supplying of fibre strands (23) is interrupted for one or more predeterminable periods of time, and in these periods of time exclusively plastic melt (29) is delivered out of the nozzle (12), wherein the first or second mass flow target ratio is present only at the supplying of fibre strands (23) .

7. The method according to Claim 6,
**characterized in that**
the impregnated fibre strands (6) are cut off at the start of a predeterminable period of time by means of a cutting device (13) arranged at the nozzle (12), and the further supplying of dry fibre strands (23) into the single-screw extruder (1) is stopped for the duration of this period of time, so that for the duration of this period of time exclusively plastic melt (29) is delivered out of the nozzle (12).

8. The method according to one of the preceding claims,
**characterized in that**
several fibre strands (23) are used and that the first or second mass flow target ratio is set such that, and preferably regulated such that, the impregnated fibre strands (6) exiting from the nozzle (12) respectively have a surface which is covered with plastic melt (29) and which is preferably smooth.

9. The method according to one of Claims 1 to 7,
**characterized in that**
a single fibre strand (23) is used and that the first or second mass flow target ratio is set and preferably regulated such that the impregnated fibre strand (6) exiting from the nozzle (12) has a surface which is covered with plastic melt (29) and is preferably smooth.

10. A device for carrying out the method according to one of Claims 1 to 9 comprising:
- a single-screw extruder (1) with a cylinder (7) and with a screw (8), mounted rotatably therein and able to be driven at a variable rotation speed,
- a first filling opening (10) in the cylinder (7) for the supplying of a plastic material (31) into the single-screw extruder (1),
- a second filling opening (11) in the cylinder (7) for the supplying of a mass flow dmF/dt of one or more continuous fibre strands (23) into the single-screw extruder (1), wherein the second filling opening (11) is arranged remotely from the first filling opening (10) with respect to conveying,
- a fibre feeding device (4), which is configured to introduce one or more continuous fibre strands (23) at a predeterminable fibre feed speed into the second filling opening (11),
- a nozzle (12) arranged at the end of the cylinder (7) remote with respect to conveying, via which a mixture of fibre strands and plastic melt can be delivered as fibre-reinforced polymer melt (32), and
- a control unit which is configured over predeterminable periods of time to keep the mass flow dmF/dt at a first mass flow target ratio to a mass flow dmS/dt of plastic melt (29) exiting from the nozzle (12) or over predeterminable periods of time to keep the mass flow dmF/dt at a second mass flow target ratio to a mass flow dmP/dt of fibre-reinforced polymer melt (32) exiting from the nozzle, in which the continuous fibre strands (6) exiting from the nozzle (12) are substantially entirely impregnated with plastic melt,
- wherein the screw (8) is configured, remotely from the second filling opening (11) with respect to conveying, having a portion (30) with a screw geometry in which the continuous fibre strands (23) can exit substantially undamaged out of the nozzle (12).

11. The device according to Claim 10,
**characterized in that**
the screw portion (30) is configured as a conveying screw (30) and has a screw shaft (24) with a helically encircling screw flight (25), wherein a constant thread depth (26), a constant thread width (27) and a constant flight width (28) are provided.

12. The device according to Claim 10 or 11,
**characterized in that**
the control unit is configured to control and preferably regulate the amount of the fibre feed speed v and/or the amount of the rotation speed n of the screw (8) such that the first mass flow target ratio and/or the second mass flow target ratio can be kept constant at a predeterminable value.

13. The device according to one of the preceding claims,
**characterized in that**
a metering unit (2) is provided, which is configured in order to input a predeterminable mass flow dmK/dt of plastic material (31) into the first filling opening, and wherein the control unit is configured to control and preferably regulate the amount of the mass flow dmK/dt of plastic material (31) at the metering unit (2) such that the first and/or second mass flow target ratio can be kept constant at a predeterminable value.

14. The device according to one of the preceding claims,
**characterized in that**
the nozzle (12) has a variable nozzle cross-section and that the control unit is configured to control and preferably regulate the nozzle cross-section such that the first and/or second mass flow target ratio can be kept constant at a predeterminable value.

15. The device according to one of the preceding claims,
**characterized in that**
at the nozzle (12) a cutting device (13) is provided, by which the fibre strands (6) exiting from the nozzle (12) can be cut off.

16. A use of a device according to one of Claims 10 to 15 for the additive manufacture of a fibre-reinforced plastic component, wherein the device is mounted on a multi-axis industrial robot (3), by which the nozzle (12) can be moved over a base (5) and a strand of fibre-reinforced polymer melt (32) can be deposited on the base (5).

17. The use of a device according to one of Claims 10 to 15 for the additive manufacture of a fibre-reinforced plastic component, wherein a base (5) is provided, on which a strand of fibre-reinforced polymer melt (32), exiting from the nozzle (12), can be deposited, wherein the base (5) can be moved in one or more directions (x, y, z) in the space.

18. The use according to Claim 16 or 17,
**characterized in that**
the fibre feed speed and the relative speed between the nozzle (12) and the deposition point of the strand are substantially identical.

## Revendications

1. Procédé de fabrication d'un composant plastique renforcé par des fibres au moyen d'une extrudeuse à vis sans fin unique (1), présentant un cylindre (7) et une vis sans fin (8) disposée rotative à l'intérieur, dans lequel un matériau plastique (31) est alimenté dans l'extrudeuse à vis sans fin unique (1) par une première ouverture de remplissage (10) dans le cylindre (7) et y est fondu en une fonte de plastique, dans lequel en aval de la première ouverture de remplissage (10), un débit massique dmF/dt d'un ou plusieurs brin(s) de fibre sans fin (23) est introduit dans l'extrudeuse à vis sans fin unique (1) par une seconde ouverture de remplissage (11) dans le cylindre (7), dans lequel au niveau de la seconde ouverture de remplissage (11), le matériau plastique (31) est présent sous forme de fonte de plastique, dans lequel les brins de fibres sans fin (23) sont introduits dans la fonte de plastique à l'état sec et imprégnés de fonte de plastique, dans lequel le mélange de brins de fibres et de fonte de plastique sort d'une filière (12) se trouvant à l'extrémité en aval du cylindre (7) en tant que composant plastique renforcé par des fibres (32), dans lequel une vis sans fin (8) est employée, qui présente en aval de la seconde ouverture de remplissage (11) une géométrie de vis sans fin telle que les brins de fibres sans fin (23) alimentés sortent de la filière (12) essentiellement intacts et imprégnés de fonte de plastique (29), dans lequel il y a un débit massique dmS/dt de fonte de plastique sortant de la filière et un débit massique dmP/dt de composant plastique renforcé par des fibres (32) sortant de la filière, dans lequel le débit massique dmF/dt et le débit massique dmS/dt sont dans un premier rapport entre eux dans lequel les brins de fibres sans fin (6) sortant de la filière (12) sont essentiellement complètement imprégnés de fonte de plastique, dans lequel ce premier rapport représente un premier rapport nominal de débit massique qui est essentiellement maintenu constant sur des intervalles de temps pouvant être prédéfinis, et/ou dans lequel le débit massique dmF/dt et le débit massique dmP/dt sont dans un second rapport entre eux, dans lequel les brins de fibres sans fin (6) sortant de la filière (12) sont essentiellement complètement imprégnés de fonte de plastique, dans lequel le second rapport représente un second rapport nominal de débit massique qui est essentiellement maintenu constant sur des intervalles de temps pouvant être prédéfinis.

2. Procédé selon la revendication 1, **caractérisé en ce que**
le premier rapport nominal de débit massique ou le second rapport nominal de débit massique est déterminé dans une phase d'apprentissage en amont.

3. Procédé selon la revendication 1 ou 2, **caractérisé en ce que**
le premier ou le second rapport nominal de débit massique est réglé et de préférence régulé **en ce que** la vitesse v à laquelle les brins de fibres (23) sont alimentés dans l'extrudeuse à vis sans fin unique (1) et/ou le régime n de la vis sans fin (7) et/ou le débit massique dmK/dt de matériau plastique (31) qui est alimenté dans l'extrudeuse à vis sans fin unique (1) sont ainsi réglés et de préférence ainsi régulés qu'ils sont dans un rapport entre eux dans lequel le rapport nominal de débit massique est présent.

4. Procédé selon l'une des revendications précédentes, **caractérisé en ce que**
une filière (12) à section de filière variable est employée et que la section de filière est ainsi réglée et de préférence régulée que le premier ou le second rapport nominal de débit massique est présent.

5. Procédé selon l'une des revendications précédentes, **caractérisé en ce que**
le composant plastique renforcé par des fibres (32) est employé pour la fabrication additive d'une pièce de plastique renforcée par des fibres.

6. Procédé selon la revendication 5, **caractérisé en ce que**
l'alimentation de brins de fibres (23) est interrompu pendant un ou plusieurs intervalle(s) de temps pouvant être prédéfini (s) et dans ces intervalles de temps, seule de la fonte de matière plastique (29) sort de la filière (12), dans lequel le premier ou le second rapport nominal de débit massique est présent uniquement lors de l'alimentation de brins de fibres (23).

7. Procédé selon la revendication 6, **caractérisé en ce que**
au moyen d'un dispositif de coupe (13) disposé sur la filière (12), les brins de fibres imprégnés (6) sont coupés au début d'un intervalle de temps pouvant être prédéfini et la poursuite de l'alimentation de brins de fibres secs (23) dans l'extrudeuse à vis sans fin unique (1) est arrêté pendant la durée de cet intervalle de temps, de sorte que pendant la durée de cet intervalle de temps, seule de la fonte de plastique (29) sort de la filière (12).

8. Procédé selon l'une des revendications précédentes, **caractérisé en ce que**
plusieurs brins de fibres (23) sont employés et que le premier ou le second rapport nominal de débit massique est ainsi réglé et de préférence régulé que les brins de fibres imprégnés (6) sortant de la filière (12) présentent respectivement une surface de préférence lisse, recouverte de fonte de plastique (29).

9. Procédé selon l'une des revendications 1 à 7, **caractérisé en ce que**
un brin de fibres individuel (23) est employé et que le premier ou le second rapport nominal de débit massique est ainsi réglé et de préférence régulé que le brin de fibres imprégné (6) sortant de la filière (12) présente respectivement une surface de préférence lisse, recouverte de fonte de plastique (29) .

10. Dispositif de réalisation du procédé selon l'une des revendications 1 à 9, comprenant :
- une extrudeuse à vis sans fin unique (1) comprenant un cylindre (7) et une vis sans fin (8) disposée rotative à l'intérieur et pouvant être entraînée à un régime variable,
- une première ouverture de remplissage (10) dans le cylindre (7) pour l'alimentation d'un matériau plastique (31) dans l'extrudeuse à vis sans fin unique (1),
- une seconde ouverture de remplissage (11) dans le cylindre (7) pour l'alimentation d'un débit massique dmF/dt d'un ou plusieurs brin(s) de fibres sans fin (23) dans l'extrudeuse à vis sans fin unique (1), dans lequel la seconde ouverture de remplissage (11) est disposée en aval de la première ouverture de remplissage (10),
- un dispositif d'alimentation en fibres (4) qui est conçu pour introduire un ou plusieurs brin(s) de fibres sans fin (23) à une vitesse d'alimentation de fibres pouvant être prédéfinie dans la seconde ouverture de remplissage (11),
- une filière (12) disposée à l'extrémité en aval du cylindre (7) par laquelle un mélange de brins de fibres et de fonte de plastique peut sortir en tant que composant plastique renforcé par des fibres (32), et
- une unité de commande qui est conçue pour maintenir, sur des intervalles de temps pouvant être prédéfinis, le débit massique dmF/dt dans un premier rapport nominal de débit massique en un débit massique dmS/dt de fonte de plastique (29) sortant de la filière (12) ou sur des intervalles de temps pouvant être prédéfinis, maintenir le débit massique dmF/dt dans un second rapport nominal de débit massique en un débit massique dmP/dt de composant plastique renforcé par des fibres (32) sortant de la filière dans lequel les brins de fibres sans fin (6) sortant de la filière (12) sont essentiellement complètement imprégnés de fonte de plastique,
- dans lequel la vis sans fin (8) est conçue en aval de la seconde ouverture de remplissage (11) un tronçon (30) avec une géométrie de vis sans fin dans laquelle les brins de fibres sans fin (23) sortent essentiellement intacts de la filière (12) .

11. Dispositif selon la revendication 10, **caractérisé en ce que**
le tronçon de vis sans fin (30) est conçu en tant que vis sans fin de transport (30) et présente un arbre de vis sans fin (24) avec une crête de vis hélicoïdale (25), dans lequel une profondeur de spire constante (26), une largeur de spire constante (27) et une largeur de crête constante (28) sont prévues.

12. Dispositif selon la revendication 10 ou 11, **caractérisé en ce que**
l'unité de commande est conçue pour piloter et de préférence réguler la valeur absolue de la vitesse d'alimentation de fibres v et/ou la valeur absolue du régime n de la vis sans fin (8) de telle sorte que le premier rapport nominal de débit massique et/ou le second rapport nominal de débit massique peut être maintenu constant à une valeur pouvant être prédéfinie.

13. Dispositif selon l'une des revendications précédentes, **caractérisé en ce que** une unité de dosage (2) est prévue qui est conçue pour introduire un débit massique pouvant être prédéfini dmK/dt de matériau plastique (31) dans la première ouverture de remplissage et dans lequel l'unité de commande est conçue pour piloter et de préférence réguler la valeur du débit massique dmK/dt de matériau plastique (31) sur l'unité de dosage (2) de telle sorte que le premier et/ou le second rapport nominal de débit massique peut être maintenu constant à une valeur pouvant être prédéfinie.

14. Dispositif selon l'une des revendications précédentes, **caractérisé en ce que**
la filière (12) présente une section de filière variable et que l'unité de commande est conçue pour piloter et de préférence réguler la section de filière de telle sorte que le premier et/ou le second rapport nominal de débit massique peut être maintenu constant à une valeur pouvant être prédéfinie.

15. Dispositif selon l'une des revendications précédentes, **caractérisé en ce que**
un dispositif de coupe (13) est prévu sur la filière (12) avec lequel les brins de fibres (6) sortant de la filière (12) peuvent être coupés.

16. Utilisation d'un dispositif selon l'une des revendications 10 à 15 pour la fabrication additive d'une pièce de plastique renforcée par des fibres, dans lequel le dispositif est placé sur un robot industriel multi-axial (3) avec lequel la filière (12) se déplace sur un support (5) et un brin d'un composant plastique renforcé par des fibres (32) peut être déposé sur le support (5).

17. Utilisation d'un dispositif selon l'une des revendications 10 à 15 pour la fabrication additive d'une pièce de plastique renforcée par des fibres, dans lequel un support (5) est prévu, sur lequel un brin d'un composant plastique renforcé par des fibres (32) sortant de la filière (12) peut être déposé, dans lequel le support (5) peut être déplacé dans une ou plusieurs direction(s) (x, y, z) dans l'espace.

18. Utilisation selon la revendication 16 ou 17, **caractérisé en ce que**
la vitesse d'alimentation des fibres et la vitesse relative entre la filière (12) et le point de dépose du brin sont essentiellement identiques.
